# EUROPEAN PATENT SPECIFICATION

(11) **EP 3 561 245 B1**
(45) Date of publication and mention of the grant of the patent: **03.06.2020**
(21) Application number: 19168068.5
(22) Date of filing: 09.04.2019
(51) Int. Cl.: B62M 7/04, F01M 11/04, F01M 11/12, F01N 1/00, F01N 13/00, F01N 13/18, G01F 23/04

(54) **STRADDLED VEHICLE**
GRÄTSCHSITZFAHRZEUG
VÉHICULE À ENFOURCHER

(30) Priority: 24.04.2018 JP 2018083219
(43) Date of publication of application: 30.10.2019
(73) Proprietor: YAMAHA HATSUDOKI KABUSHIKI KAISHA, Iwata-shi, Shizuoka 438-8501 (JP)
(72) Inventor: AKIYAMA, Kiyokazu, Iwata-shi, Shizuoka 438-8501 (JP); SATO, Atsushi, Iwata-shi, Shizuoka 438-8501 (JP)
(74) Representative: Grünecker Patent- und Rechtsanwälte PartG mbB

(56) References cited:
- WO-A1-2018/025652
- WO-A1-2018/030110
- JP-A- 2007 085 235
- JP-A- 2017 227 128
- US-A1- 2010 294 231

## Description

The present invention relates to a straddled vehicle.

### Description of the Related Art

A straddled vehicle known to date includes an internal combustion engine, an exhaust pipe in which an exhaust gas from the internal combustion engine flows, an oxygen sensor for detecting an oxygen concentration of an exhaust gas, and a silencer connected to a downstream end of the exhaust pipe. Such a straddled vehicle is described in, for example, JP 2017-227128 A. The straddled vehicle described in JP 2017-227128 A includes an oxygen sensor disposed near an exhaust port of an internal combustion engine and an oxygen sensor disposed at a rear end of a silencer. WO 2018/030110 A1 describes a similar vehicle.

In general, an internal combustion engine of a straddled vehicle has an port through which oil is injected into an oil pan, and an oil level gauge is attached to the port such that the oil level gauge is insertable and extractable. The oil level gauge includes a stem-shaped gauge portion for detecting the amount of oil stored in the oil pan and a knob pinched by a user in insertion and extraction.

For some types of a straddled vehicle, there has been a need for disposing an oxygen sensor in space between an internal combustion engine and a silencer in a vehicle side view. In this space, however, a silencer bracket connecting the internal combustion engine and the silencer to each other is disposed, and thus, the oxygen sensor should be placed in a limited space. In some cases, a knob of an oil level gauge is disposed in this space. In detecting the amount of oil in the oil pan, the oil level gauge has to be inserted and extracted into or from aport. In the case where the oxygen sensor is disposed in the limited space as described above, the oxygen sensor becomes an obstacle and might hinder insertion and extraction of the oil level gauge.

It is therefore an object of the present invention to provide a straddled vehicle in which an oxygen sensor and a knob of an oil level gauge are disposed in space between an internal combustion engine and a silencer in a vehicle side view and the oil level gauge can be easily inserted and extract. According to the present invention said object is solved by a straddled vehicle having the features of independent claim 1. Moreover, said object is also solved by a straddled vehicle having the feature of independent claim 5. Preferred embodiments are laid down in the dependent claims.

A straddled vehicle disclosed here includes an internal combustion engine, an oil level gauge, an exhaust pipe, a silencer, a fixing base, and an oxygen sensor. The internal combustion engine has an oil port that is open rearward, upward, and outward in a vehicle width direction. The oil level gauge is attached to the port such that the oil level gauge is insertable and extractable. The exhaust pipe includes an upstream end portion connected to the internal combustion engine and a downstream end portion located rearward of the upstream end portion. An exhaust gas from the internal combustion engine flows in the exhaust pipe. The silencer is connected to the downstream end portion of the exhaust pipe and disposed rearward of the internal combustion engine. The fixing base is provided on the exhaust pipe. The oxygen sensor is attached to the fixing base and is configured to detect an oxygen concentration of the exhaust gas. The oil level gauge includes a stem-shaped gauge portion disposed inside the internal combustion engine while the oil level gauge is attached to the port and a knob disposed outward of the internal combustion engine. The fixing base is disposed rearward of the port, outward of the port in the vehicle width direction, and forward of the silencer. The oxygen sensor is disposed inward of a center of the exhaust pipe in the vehicle width direction, and an axis of the oxygen sensor is disposed below a central line of the port.

In the straddled vehicle, the fixing base to which the oxygen sensor is attached is disposed rearward of the oil port of the internal combustion engine and outward of the oil port in the vehicle width direction, and the oxygen sensor is disposed in the manner as described above. Accordingly, when a user pinches the knob with a hand and pulls the oil level gauge rearward and upward from the port, and when the user inserts the oil level gauge forward and downward into the port, the oxygen sensor is less likely to hinder such movement. As a result, the oil level gauge can be easily inserted and extracted.

In a preferred aspect, whole oxygen sensor overlaps the exhaust pipe in a vehicle side view.

In the aspect, the oxygen sensor does not extend upward from the exhaust pipe in the vehicle side view. Thus, the oxygen sensor is less likely to hinder insertion and extraction of the oil level gauge.

In a preferred aspect, the straddled vehicle includes a silencer bracket. The silencer bracket includes a support portion supporting the silencer, a fixing portion fixed to the internal combustion engine, and an arm portion extending rearward from the fixing portion toward the support portion. The silencer bracket includes a sensor protection portion disposed below at least a portion of the oxygen sensor and overlapping at least a portion of the oxygen sensor in a vehicle bottom view.

Since the oxygen sensor is disposed inward of the center of the exhaust pipe in the vehicle width direction and the axis of the oxygen sensor is located below the central line of the port as described above, when stones are whirled up from the ground during traveling of the straddled vehicle, these stones (hereinafter referred to as stone chips) might hit the oxygen sensor. However, in the aspect, the sensor protection portion of the silencer bracket can protect the oxygen sensor against stone chips thrown from below.

In a preferred aspect, the straddled vehicle includes a fan disposed outward of the internal combustion engine in the vehicle width direction and a fan cover disposed outward of the fan in the vehicle width direction. The oxygen sensor is disposed rearward of the fan cover. At least a portion of the oxygen sensor overlaps the fan cover in a vehicle front view.

In the aspect, the fan cover can protect the oxygen sensor against stone chips from the front.

A straddled vehicle disclosed here includes an internal combustion engine, an oil level gauge, an exhaust pipe, a silencer, a fixing base, and an oxygen sensor. The internal combustion engine has an oil port that is open rearward, upward, and outward in the vehicle width direction. The oil level gauge is attached to the port such that the oil level gauge is insertable and extractable. The exhaust pipe includes an upstream end portion connected to the internal combustion engine and a downstream end portion located rearward of the upstream end portion. An exhaust gas from the internal combustion engine flows in the exhaust pipe. The silencer is connected to the downstream end portion of the exhaust pipe and disposed rearward of the internal combustion engine. The fixing base is provided on the exhaust pipe. The oxygen sensor is attached to the fixing base and is configured to detect an oxygen concentration of the exhaust gas. The oil level gauge includes a stem-shaped gauge portion disposed inside the internal combustion engine while the oil level gauge is attached to the port and a knob disposed outside the internal combustion engine. The fixing base is disposed rearward of the port, outward of the port in the vehicle width direction, and forward of the silencer. The oxygen sensor is disposed outward of the knob of the oil level gauge in the vehicle width direction in a vehicle plan view. At least a portion of the knob of the oil level gauge is disposed rearward of the oxygen sensor in a vehicle side view.

In the straddled vehicle, the fixing base to which the oxygen sensor is attached is disposed rearward of the oil port of the internal combustion engine and outward of the oil port in the vehicle width direction. The oxygen sensor is disposed in the manner as described above, and at least a portion of the knob is disposed rearward of the oxygen sensor. Accordingly, when a user pinches the knob with a hand and pulls the oil level gauge rearward and upward from the port, and when the user inserts the oil level gauge forward and downward into the port, the oxygen sensor is less likely to hinder such movement. As a result, the oil level gauge can be easily inserted and extracted.

In a preferred aspect, whole oxygen sensor overlaps the exhaust pipe in a vehicle bottom view.

In the aspect, the oxygen sensor is disposed outward of the knob of the oil level gauge in the vehicle width direction, but does not extend inward of the exhaust pipe in the vehicle width direction. Thus, the oxygen sensor is less likely to hinder insertion and extraction of the oil level gauge. The exhaust pipe protects the oxygen sensor against stone chips thrown from below.

In a preferred aspect, the straddled vehicle includes a silencer cover disposed outward of the silencer in the vehicle width direction. The silencer includes an upper edge portion extending upward and rearward from the downstream end portion of the exhaust pipe in a vehicle side view. The silencer cover includes a cover upper edge portion located below the upper edge portion of the silencer in a vehicle side view.

In the aspect, since the cover upper edge portion is located below the upper edge portion of the silencer, space above the upper edge portion of the silencer can be obtained. Accordingly, the silencer cover is less likely to hinder insertion and extraction of the oil level gauge. As a result, the oil level gauge can be easily inserted and extracted.

In a preferred aspect, the straddled vehicle includes a catalyst that is disposed inside the exhaust pipe and purifies the exhaust gas. The oxygen sensor is attached to a portion of the exhaust pipe downstream of the catalyst in a flow direction of the exhaust gas.

In the aspect, the oxygen sensor can detect an oxygen concentration of an exhaust gas purified by the catalyst. Thus, the oxygen sensor can detect deterioration of the catalyst.

In a preferred aspect, at least a portion of the catalyst and the knob of the oil level gauge are located on an identical vertical line in a vehicle side view.

In the aspect, since the catalyst in addition to the knob of the oil level gauge is disposed in space between the internal combustion engine and the silencer in the vehicle side view, the oxygen sensor is placed in a further limited space. Thus, the advantage that the oxygen sensor is less likely to hinder insertion and extraction of the oil level gauge described above becomes especially significant.

In a preferred aspect, the straddled vehicle includes another oxygen sensor attached to a portion of the exhaust pipe upstream of the catalyst in a flow direction of the exhaust gas.

In the aspect, the another oxygen sensor can detect an oxygen concentration of an exhaust gas ejected from the internal combustion engine and before purification by the catalyst. Accordingly, an operating state of the internal combustion engine can be detected by using the another oxygen sensor so that the internal combustion engine can be controlled.

In a preferred aspect, the exhaust pipe includes an upstream portion to which the another oxygen sensor is attached, and a downstream portion located downstream of the upstream portion in a flow direction of the exhaust gas and provided with the fixing base. The downstream portion has an outside diameter larger than an outside diameter of the upstream portion. The catalyst is disposed inside the downstream portion.

In the aspect, the oxygen sensor is provided on the downstream portion of the exhaust pipe via the fixing base. The outside diameter of the downstream portion is larger than the outside diameter of the upstream portion. Accordingly, the oxygen sensor is placed in a further limited space. Thus, the advantage that the oxygen sensor is less likely to hinder insertion and extraction of the oil level gauge described above becomes especially significant.

The present invention provides a straddled vehicle in which an oxygen sensor and a knob of an oil level gauge are disposed in space between an internal combustion engine and a silencer in a vehicle side view and the oil level gauge can be easily inserted and extract.

### BRIEF DESCRIPTION OF THE DRAWINGS

FIG. 1 is a right side view of a scooter according to a first preferred embodiment.
FIG. 2 is a partial right side view of the scooter according to the first preferred embodiment.
FIG. 3 is a partial plan view of the scooter according to the first preferred embodiment.
FIG. 4 is a partial bottom view of the scooter according to the first preferred embodiment.
FIG. 5 is a partial perspective view of the scooter according to the first preferred embodiment.
FIG. 6 is a partial front view of the scooter according to the first preferred embodiment.
FIG. 7A is a partial perspective view of the scooter according to the first preferred embodiment and illustrates a state where a user pinches a knob of an oil level gauge.
FIG. 7B is a partial perspective view of the scooter according to the first preferred embodiment and illustrates a state where the user pulls the oil level gauge and detaches the oil level gauge from a port.
FIG. 8 is a right side view of a scooter according to a second preferred embodiment.
FIG. 9 is a right side view of the scooter according to the second preferred embodiment.
FIG. 10 is a partial plan view of the scooter according to the second preferred embodiment.
FIG. 11 is a partial bottom view of the scooter according to the second preferred embodiment.

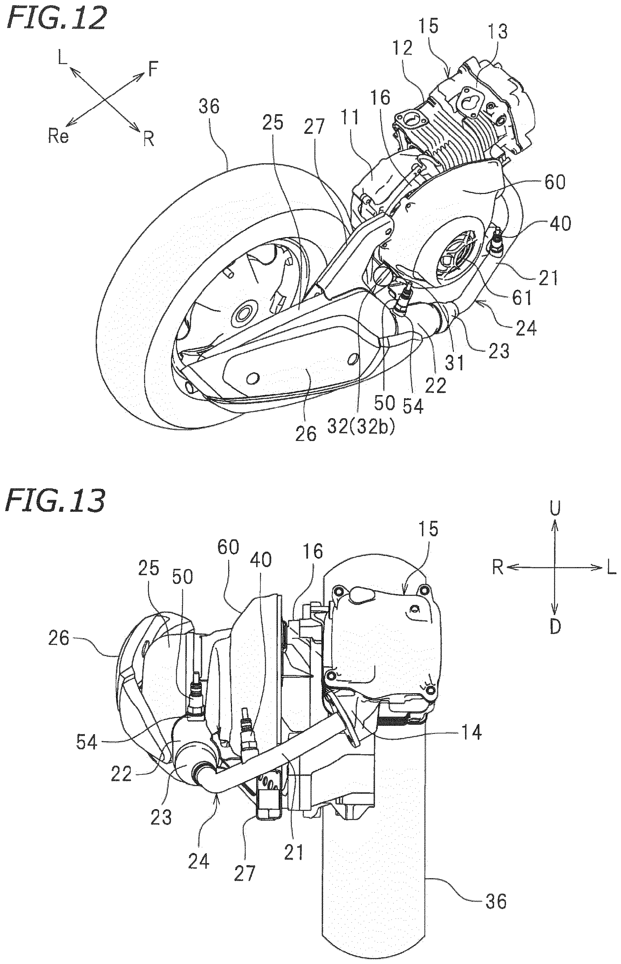

FIG. 12 is a partial perspective view of the scooter according to the second preferred embodiment.
FIG. 13 is a partial front view of the scooter according to the second preferred embodiment.

### DETAILED DESCRIPTION OF THE PREFERRED EMBODIMENTS

### First Preferred Embodiment

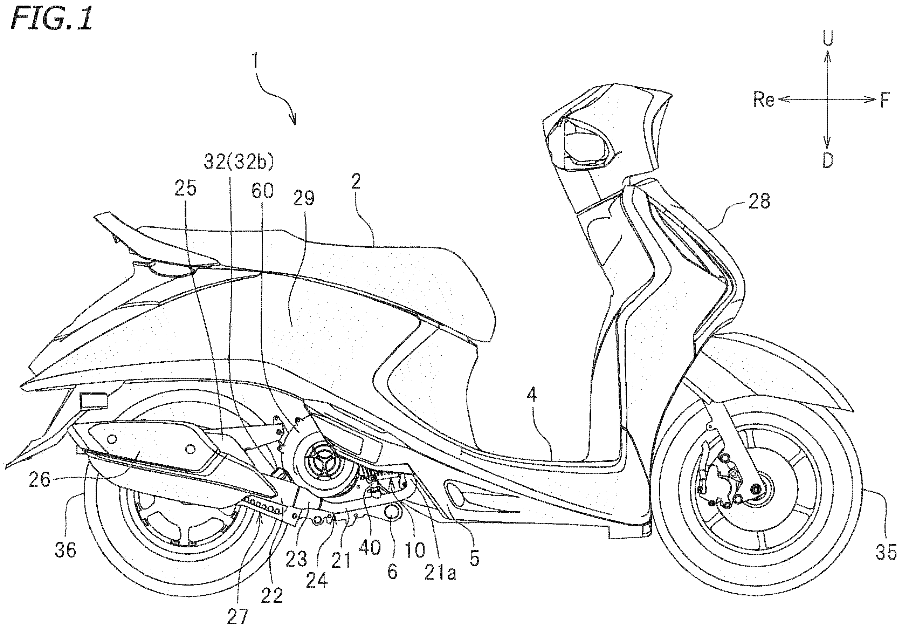

A preferred embodiment of the present invention will be described hereinafter with reference to the drawings. As illustrated in FIG. 1, a straddled vehicle according to this preferred embodiment is a scooter 1. The scooter 1 includes a seat 2 on which a rider is seated. Unless otherwise specified, the terms front, rear, left, right, up, and down as used in the description below, refer to front, rear, left, right, up, and down, respectively, as seen from an imaginary rider sitting on the seat 2 in a case where the scooter 1 on which the rider is not seated and a load is not mounted and which is not filled with fuel is stationary in an upright position on a horizontal surface. The reference characters F, Re, L, R, U, and D in the drawings represent front, rear, left, right, up, and down, respectively.

The scooter 1 includes an unillustrated vehicle body frame, a front wheel 35, a rear wheel 36, a foot board 4, a pivot shaft 6 provided on the vehicle body frame, and an engine unit 10 swingably supported by the pivot shaft 6. The scooter 1 includes a front cover 28 disposed ahead of an unillustrated head pipe, a side cover 29 disposed outward of the vehicle body frame in a vehicle width direction, and an under cover 5 disposed below the front cover 28 and the side cover 29. At least a portion of the under cover 5 is disposed below the foot board 4, rearward of the front wheel 35, and forward of the rear wheel 36.

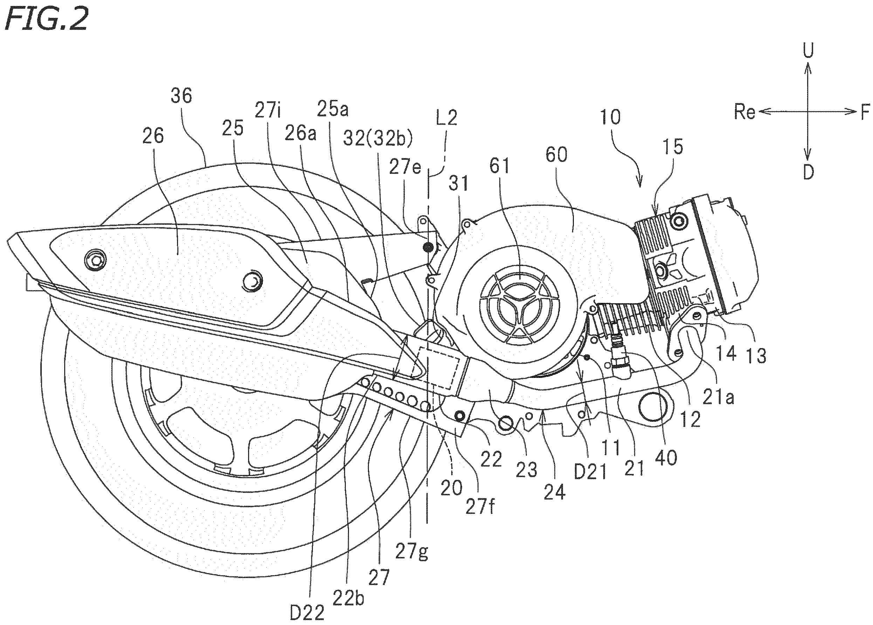

As illustrated in FIG. 2, the engine unit 10 includes an internal combustion engine 15 including a crankcase 11, a cylinder body 12 connected to the crankcase 11, and a cylinder head 13 connected to the cylinder body 12. Although not shown, a crank shaft of the internal combustion engine 15 is disposed inside the crankcase 11. The cylinder body 12 is disposed ahead of the crankcase 11, and the cylinder head 13 is disposed ahead of the cylinder body 12. The cylinder head 13 includes an exhaust port 14 from which an exhaust gas is exhausted.

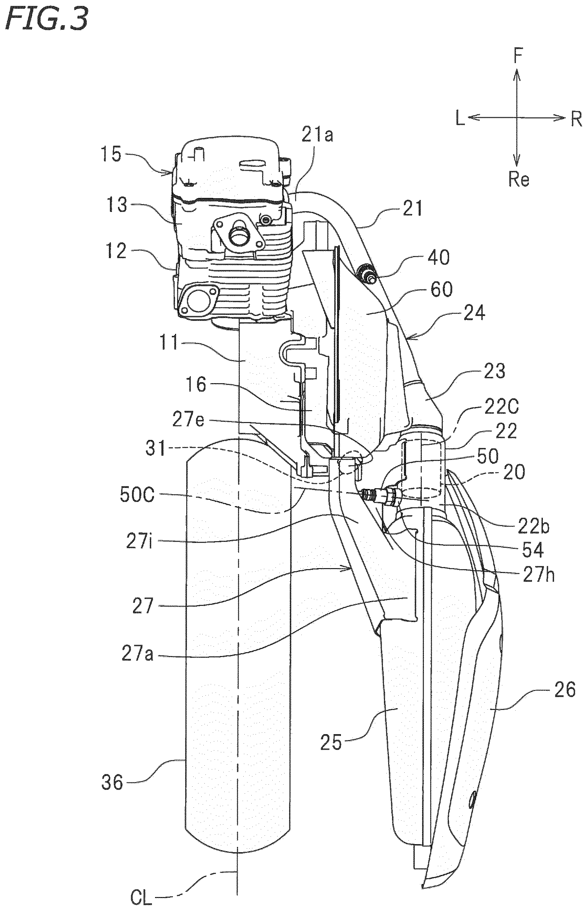

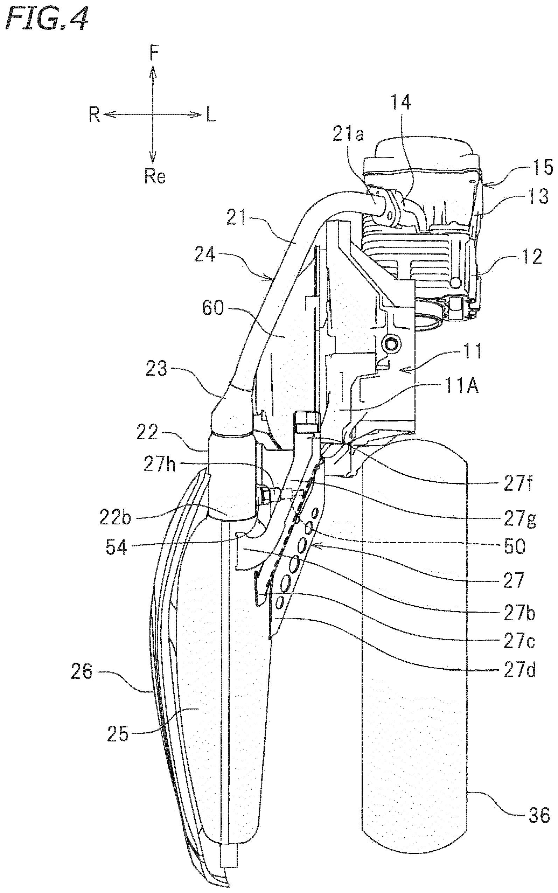

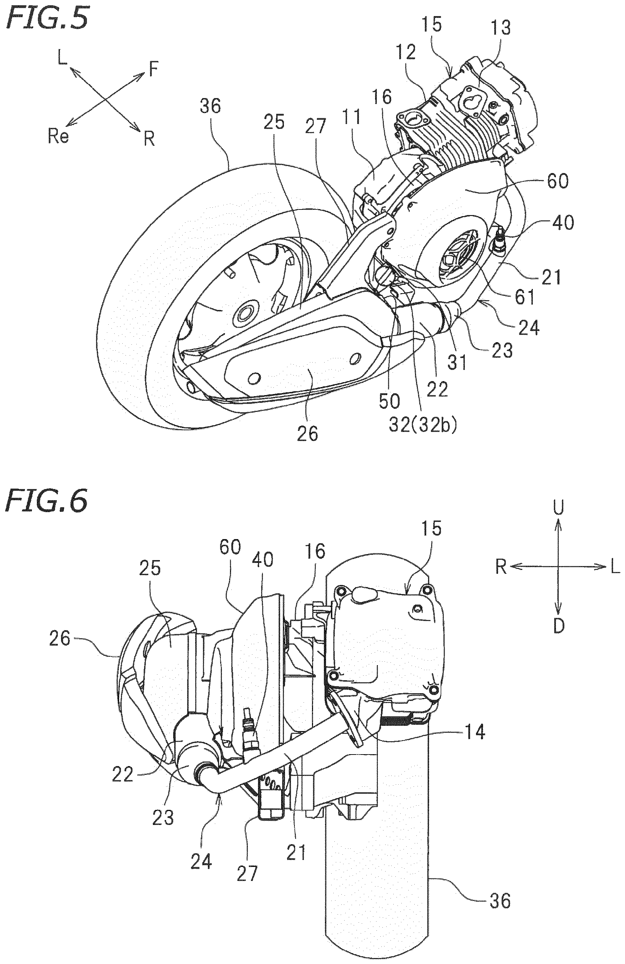

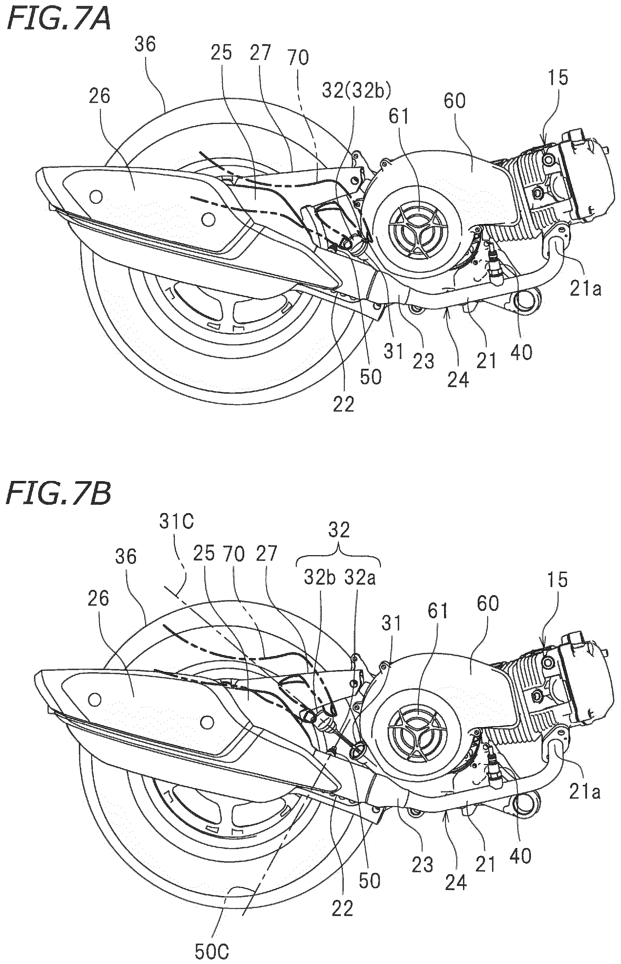

The crankcase 11 includes an oil pan 11A (see FIG. 4) for storing oil therein. The oil pan 11A is disposed below the unillustrated crank shaft. The oil pan 11A constitutes a bottom portion of the crankcase 11. The crankcase 11 has an oil port 31 (see FIGS. 5 and 7B) that is open rearward, upward, and outward in the vehicle width direction. The expression of outward in the vehicle width direction refers to the direction away from a vehicle central line CL (see FIG. 3). The expression of inward in the vehicle width direction refers to the direction toward the vehicle central line CL.

As illustrated in FIGS. 7A and 7B, an oil level gauge 32 is attached to the port 31 such that the oil level gauge 32 can be inserted and extracted. As illustrated in FIG. 7B, the oil level gauge 32 includes a stem-shaped gauge portion 32a disposed inside the crankcase 11 while the oil level gauge 32 is attached to the port 31, and a knob 32b disposed outside the crankcase 11. In this example, the gauge portion 32a and the knob 32b are integrally formed, but may be separate components. A user detaches the oil level gauge 32 from the port 31 by pinching and pulling the knob 32b with a hand 70. The user detects an oil amount in the oil pan 11A by reading the level of oil adhering to the gauge portion 32a. After the detection of the oil amount, the user pinches the knob 32b with the hand 70 to insert the oil level gauge 32 into the port 31.

As illustrated in FIG. 3, a fan 16 is disposed outward of the internal combustion engine 15 in the vehicle width direction. A fan cover 60 is disposed outward of the fan 16 in the vehicle width direction. In this example, the fan cover 60 is disposed at the right of a portion of the crankcase 11 and a portion of the cylinder body 12. As illustrated in FIG. 2, the fan cover 60 has an opening 61 through which air is taken. The fan cover 60 is not limited to a specific position, a specific shape, and a specific dimension. In this preferred embodiment, an impeller (not shown) of the fan 16 is coupled to the crank shaft of the internal combustion engine 15 and is driven by the crank shaft. A driving source of the fan 16 is not limited to the crank shaft. The impeller of the fan 16 may not be coupled to the crank shaft. When the impeller of the fan 16 rotates, air is sucked from the outside of the fan cover 60 into the inside through the opening 61. This air flows around a portion of the crankcase 11 and a portion of the cylinder body 12 and cools the internal combustion engine 15.

Although not shown, the engine unit 10 includes a transmission case disposed at the left of the rear wheel 36, and an unillustrated belt continuously variable transmission (hereinafter referred to as a CVT) disposed inside the transmission case. The CVT is coupled to the crank shaft of the internal combustion engine 15 and the rear wheel 36, and transfers a torque of the crank shaft to the rear wheel 36 so that a transmission gear ratio is changeable. The rear wheel 36 is driven by the internal combustion engine 15.

As illustrated in FIG. 2, the scooter 1 includes an exhaust pipe 24 and a silencer 25. The exhaust pipe 24 includes a first exhaust pipe 21, a second exhaust pipe 22 accommodating a catalyst 20, and a pipe fitting 23 connecting the first exhaust pipe 21 and the second exhaust pipe 22 to each other. An upstream end portion 21a of the first exhaust pipe 21 is an upstream end portion of the exhaust pipe 24, and is connected to the exhaust port 14 of the cylinder head 13. The downstream end portion 22b of the second exhaust pipe 22 is a downstream end portion of the exhaust pipe 24, and is connected to the silencer 25. A silencer cover 26 is disposed outward of the silencer 25 in the vehicle width direction. The first exhaust pipe 21, the pipe fitting 23, the second exhaust pipe 22, the silencer 25, and the silencer cover 26 are configured to swing integrally with the engine unit 10.

As illustrated in FIG. 2, at least a portion of the catalyst 20 and the knob 32b of the oil level gauge 32 are at an identical position in a vehicle fore-and-aft direction. In other words, at least a portion of the catalyst 20 and the knob 32b of the oil level gauge 32 are located on the same vertical line L2 in a vehicle side view.

The first exhaust pipe 21 and the second exhaust pipe 22 are both metal pipes. As illustrated in FIG. 2, the second exhaust pipe 22 has an outside diameter D22 larger than an outside diameter D21 of the first exhaust pipe 21, and the second exhaust pipe 22 has an inside diameter larger than an inside diameter of the first exhaust pipe 21. The inside diameter and the outside diameter of the pipe fitting 23 increase from the first exhaust pipe 21 toward the second exhaust pipe 22.

A first oxygen sensor 40 is attached to the first exhaust pipe 21. The first oxygen sensor 40 is disposed upstream of the catalyst 20 in a flow direction of an exhaust gas, and detects an oxygen concentration of an exhaust gas before purification by the catalyst 20. Based on the oxygen concentration of the exhaust gas detected by the first oxygen sensor 40, an air-fuel ratio of an exhaust gas emitted can be detected. Thus, based on a detection result of the first oxygen sensor 40, the internal combustion engine 15 can be controlled to obtain a predetermined combustion state.

As illustrated in FIG. 3, a fixing base 54 is provided on the second exhaust pipe 22, and a second oxygen sensor 50 is fixed to the fixing base 54. The fixing base 54 is not limited to a specific structure, and in this example, is constituted by a cylinder welded to the second exhaust pipe 22. The fixing base 54 is disposed rearward of the port 31 and outward of the port 31 in the vehicle width direction. The fixing base 54 is located forward of the silencer 25.

The second oxygen sensor 50 is disposed downstream of the catalyst 20 and detects an oxygen concentration of an exhaust gas after purification by the catalyst 20. If the catalyst 20 has deteriorated, the exhaust gas is not appropriately purified. Thus, based on a detection result of the second oxygen sensor 50, it can be detected whether the catalyst 20 has deteriorated or not. Deterioration of the catalyst 20 may be detected by comparing the detection result of the first oxygen sensor 40 and the detection result of the second oxygen sensor 50.

As illustrated in FIG. 2, whole second oxygen sensor 50 overlaps the second exhaust pipe 22 in a vehicle side view. As illustrated in FIG. 3, the second oxygen sensor 50 is disposed inward of a center 22C of the second exhaust pipe 22 in the vehicle width direction. As illustrated in FIG. 7B, an axis 50C of the second oxygen sensor 50 is located below a central line 31C of the port 31. The expression that the axis 50C is located below the central line 31C means that a point on the axis 50C at which the axis 50C intersects the central line 31C in the vehicle plan view is located below a point on the central line 31C at which the central line 31C intersects the axis 50C in the vehicle plan view.

The internal combustion engine 15 and the silencer 25 are coupled to each other by a silencer bracket 27. As illustrated in FIGS. 3 and 4, the silencer bracket 27 includes support portions 27a, 27b, 27c, and 27d supporting the silencer 25 and fixing portions 27e and 27f fixed to the internal combustion engine 15. The silencer bracket 27 includes an arm portion 27i extending rearward from the fixing portion 27e toward the support portion 27a and an arm portion 27g extending rearward from the fixing portion 27f toward the support portion 27b. In this example, the silencer bracket 27 include the four support portions 27a, 27b, 27c, and 27d and the two fixing portions 27e and 27f. However, the numbers of support portions and fixing portions are not specifically limited.

As illustrated in FIG. 4, the silencer bracket 27 includes a sensor protection portion 27h overlapping at least a portion of the second oxygen sensor 50 in a vehicle bottom view. As illustrated in FIG. 3, the sensor protection portion 27h is disposed below at least a portion of the second oxygen sensor 50. The sensor protection portion 27h may overlap whole second oxygen sensor 50 in the vehicle bottom view.

The second oxygen sensor 50 is disposed rearward of the fan cover 60. As illustrated in FIG. 6, at least a portion of the second oxygen sensor 50 overlaps the fan cover 60 in a vehicle front view. In this example, whole second oxygen sensor 50 overlaps the fan cover 60 in the vehicle front view. In the vehicle front view, the second oxygen sensor 50 is hidden by the fan cover 60.

As illustrated in FIG. 2, in the vehicle side view, the silencer 25 includes an upper edge portion 25a extending upward and rearward from the downstream end portion 22b of the exhaust pipe 24. In the vehicle side view, the silencer cover 26 does not cover a portion of the silencer 25. In the vehicle side view, the silencer cover 26 includes a cover upper edge portion 26a located below the upper edge portion 25a of the silencer 25. In the vehicle side view, a portion of the silencer 25 located above the cover upper edge portion 26a does not overlap the silencer cover 26 and is exposed.

As described above, the scooter 1 according to this preferred embodiment is a straddled vehicle in which the second oxygen sensor 50 and the knob 32b of the oil level gauge 32 are disposed in space between the internal combustion engine 15 and the silencer 25 in the vehicle side view. In the scooter 1 according to this preferred embodiment, the fixing base 54 to which the second oxygen sensor 50 is attached is disposed rearward of the oil port 31 of the internal combustion engine 15 and outward of the oil port 31 in the vehicle width direction. On the other hand, the second oxygen sensor 50 is disposed inward of the center 22C of the exhaust pipe 24 in the vehicle width direction (see FIG. 3), and the axis 50C of the second oxygen sensor 50 is disposed below the central line 31C of the port 31 (see FIG. 7B) . Accordingly, when the user pinches the knob 32b with a hand and pulls the oil level gauge 32 rearward and upward from the port 31, and when the user inserts the oil level gauge 32 forward and downward into the port 31, the second oxygen sensor 50 is less likely to hinder such movement. Thus, in this preferred embodiment, the oil level gauge 32 is easily inserted and extracted.

In the scooter 1 according to this preferred embodiment, whole second oxygen sensor 50 overlaps the exhaust pipe 24 in the vehicle side view as illustrated in FIG. 2. The second oxygen sensor 50 does not extend upward from the exhaust pipe 24 in the vehicle side view. Thus, the second oxygen sensor 50 is less likely to hinder insertion and extraction of the oil level gauge 32.

In a case where the second oxygen sensor 50 is disposed inward of the center 22C of the exhaust pipe 24 in the vehicle width direction and the axis 50C of the second oxygen sensor 50 is located below the central line 31C of the port 31, when stones are whirled up from the ground during traveling of the scooter 1, these stones might hit the second oxygen sensor 50. However, in this preferred embodiment, as illustrated in FIG. 4, the sensor protection portion 27h of the silencer bracket 27 is located at least a portion of the second oxygen sensor 50 and overlaps at least a portion of the second oxygen sensor 50 in the vehicle bottom view. Thus, the sensor protection portion 27h of the silencer bracket 27 prevents stones thrown from below from hitting the second oxygen sensor 50.

In addition, in the scooter 1 according to this preferred embodiment, at least a portion of the second oxygen sensor 50 overlaps the fan cover 60 in the vehicle front view as illustrated in FIG. 6. Thus, the fan cover 60 prevents stones thrown from the front from hitting the second oxygen sensor 50.

In the scooter 1 according to this preferred embodiment, the silencer cover 26 includes the cover upper edge portion 26a located below the upper edge portion 25a of the silencer 25 in the vehicle side view as illustrated in FIG. 2. In this manner, since the cover upper edge portion 26a is located below the upper edge portion 25a of the silencer 25, space above the upper edge portion 25a of the silencer 25 is obtained. Thus, the silencer cover 26 is less likely to hinder insertion and extraction of the oil level gauge 32. Accordingly, the oil level gauge 32 is more easily inserted and extracted.

The second oxygen sensor 50 is attached to a portion of the exhaust pipe 24 downstream of the catalyst 20 in a flow direction of an exhaust gas. The second oxygen sensor 50 detects an oxygen concentration of an exhaust gas purified by the catalyst 20. Thus, in the scooter 1 according to this preferred embodiment, the second oxygen sensor 50 can detect deterioration of the catalyst 20.

On the other hand, the first oxygen sensor 40 is attached to a portion of the exhaust pipe 24 upstream of the catalyst 20 in a flow direction of an exhaust gas. The first oxygen sensor 40 detects an oxygen concentration of an exhaust gas ejected from the internal combustion engine 15 before purification by the catalyst 20. Accordingly, an operating state of the internal combustion engine 15 can be detected by using the first oxygen sensor 40 so that the internal combustion engine 15 can be controlled.

As illustrated in FIG. 2, in the scooter 1 according to this preferred embodiment, at least a portion of the catalyst 20 and the knob 32b of the oil level gauge 32 are located on an identical vertical line L2 in the vehicle side view. Since the catalyst 20 in addition to the knob 32b of the oil level gauge 32 is disposed in space between the internal combustion engine 15 and the silencer 25 in the vehicle side view, the second oxygen sensor 50 is placed in a further limited space. Thus, the advantage that the second oxygen sensor 50 is less likely to hinder insertion and extraction of the oil level gauge 32 described above becomes especially significant.

The second oxygen sensor 50 is provided on the second exhaust pipe 22 with the fixing base 54 interposed therebetween, and as illustrated in FIG. 2, the outside diameter D22 of the second exhaust pipe 22 is larger than the outside diameter D21 of the first exhaust pipe 21. The first exhaust pipe 21 and the second exhaust pipe 22 are examples of an upstream portion and a downstream portion, respectively, of the exhaust pipe 24. In this preferred embodiment, since the second exhaust pipe 22 provided with the fixing base 54 has the large outside diameter D22, the second oxygen sensor 50 is placed in a further limited space. Thus, the advantage that the second oxygen sensor 50 is less likely to hinder insertion and extraction of the oil level gauge 32 described above becomes especially significant.

Although the foregoing description is directed to the first preferred embodiment, the embodiment is merely an example, and may be variously modified.

In the preferred embodiment, whole second oxygen sensor 50 overlaps the exhaust pipe 24 in the vehicle side view. Alternatively, a portion of the second oxygen sensor 50 may not overlap the exhaust pipe 24 in the vehicle side view.

The sensor protection portion 27h of the silencer bracket 27 is not necessarily provided, and may be omitted.

In the preferred embodiment, at least a portion of the second oxygen sensor 50 overlaps the fan cover 60 in the vehicle front view. Alternatively, whole second oxygen sensor 50 may not overlap the fan cover 60 in the vehicle front view.

### Second Preferred Embodiment

Next, a second preferred embodiment will be described. In the following description, members and portions similar or corresponding to the members and portions in the first preferred embodiment are denoted by the same or like reference characters, and will not be described again in detail.

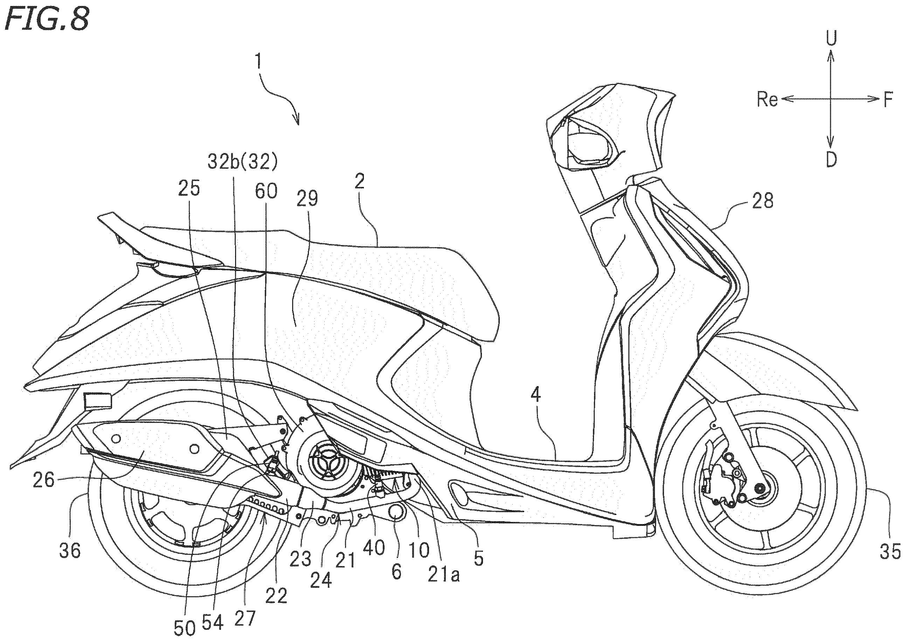

As illustrated in FIG. 8, a scooter 1 according to the second preferred embodiment also includes an unillustrated vehicle body frame, a front wheel 35, a rear wheel 36, a foot board 4, a pivot shaft 6 provided on the vehicle body frame, an engine unit 10 swingably supported by the pivot shaft 6, a front cover 28, a side cover 29, and an under cover 5. Structures of these members are similar to those of the first preferred embodiment.

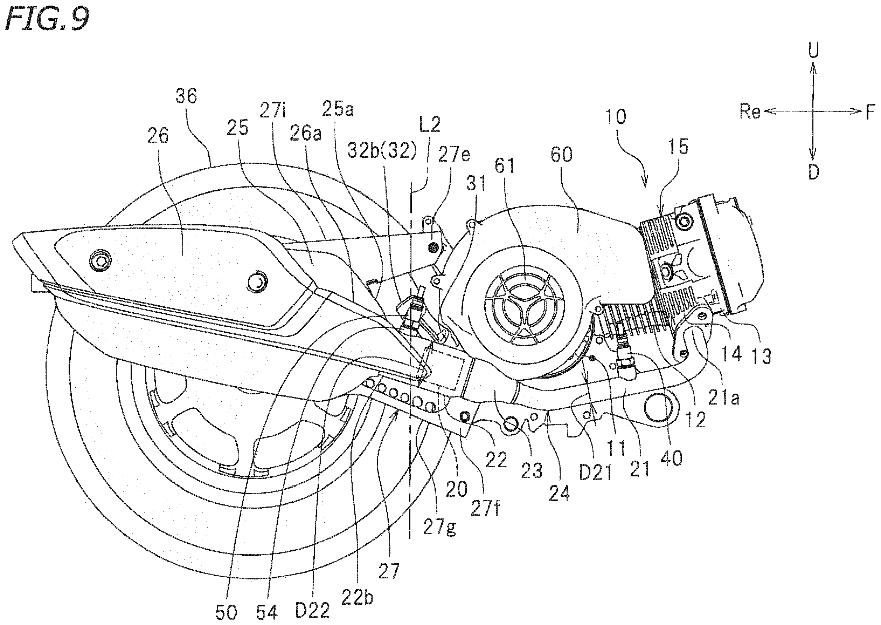

As illustrated in FIG. 9, in the second preferred embodiment, an oil level gauge 32 is attached to a port 31 of an internal combustion engine 15 such that the oil level gauge 32 can be inserted and extracted. In a manner similar to the first preferred embodiment, the oil level gauge 32 includes a stem-shaped gauge portion 32a (see FIG. 7B) disposed inside the crankcase 11 while the oil level gauge 32 is attached to the port 31, and a knob 32b disposed outside the crankcase 11. In the second preferred embodiment, however, the axial length of the knob 32b is larger than the axial length of the knob 32b in the first preferred embodiment. The axial length of the knob 32b is not specifically limited, and in this example, is larger than the axial length of the second oxygen sensor 50.

In the second preferred embodiment, a fixing base 54 is provided on the second exhaust pipe 22, and a second oxygen sensor 50 is attached to the fixing base 54. The fixing base 54 is not limited to a specific structure, and in this example, is constituted by a cylinder welded to the second exhaust pipe 22. The fixing base 54 is disposed rearward of the port 31 and outward of the port 31 in the vehicle width direction. The fixing base 54 is located forward of the silencer 25.

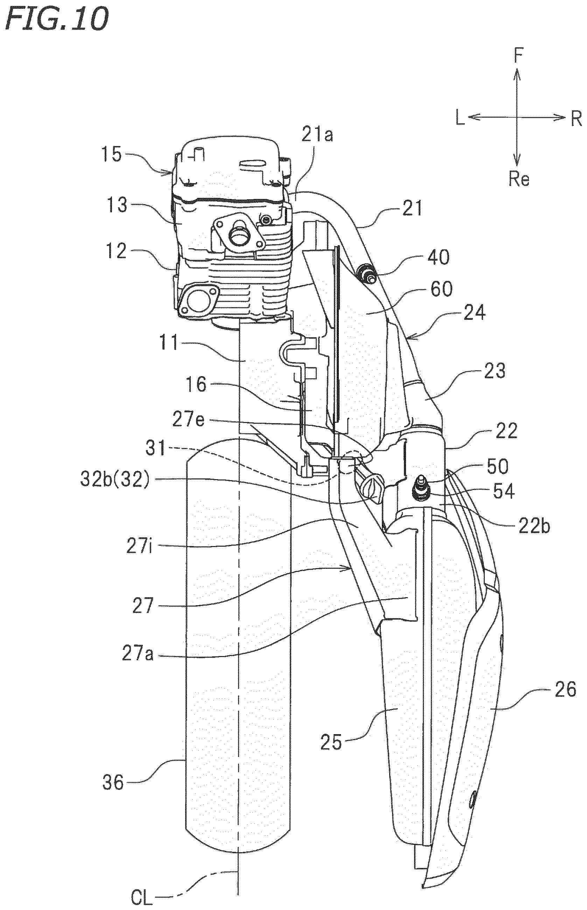

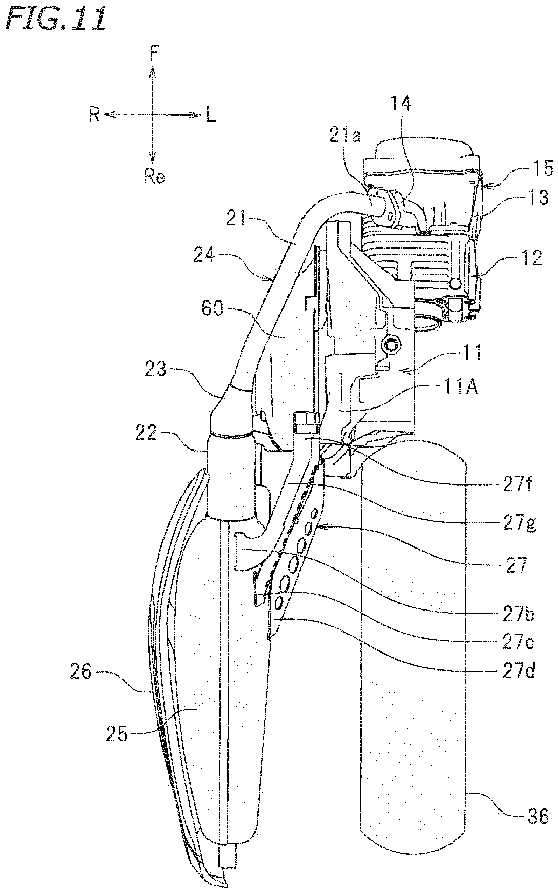

As illustrated in FIG. 10, in the second preferred embodiment, the second oxygen sensor 50 is disposed outward of the knob 32b of the oil level gauge 32 in the vehicle width direction in a vehicle plan view. As illustrated in FIG. 11, in a vehicle bottom view, whole second oxygen sensor 50 overlaps the second exhaust pipe 22. The second oxygen sensor 50 is disposed at the left of the right end of the second exhaust pipe 22 and at the right of the left end of the second exhaust pipe 22. As illustrated in FIG. 9, in a vehicle side view, at least a portion of the knob 32b of the oil level gauge 32 is disposed rearward of the second oxygen sensor 50. In the vehicle side view, a portion of the knob 32b of the oil level gauge 32 overlaps the second oxygen sensor 50. In the vehicle side view, the knob 32b extends rearward and upward from the port 31, and the second oxygen sensor 50 extends forward and upward from the fixing base 54.

In a manner similar to the scooter 1 according to the first embodiment, the scooter 1 according to the second preferred embodiment is a straddled vehicle in which the second oxygen sensor 50 and the knob 32b of the oil level gauge 32 are disposed in space between the internal combustion engine 15 and the silencer 25 in the vehicle side view. In the scooter according to the second preferred embodiment, the fixing base 54 to which the second oxygen sensor 50 is attached is disposed rearward of the oil port 31 of the internal combustion engine 15 and outward of the oil port 31 in the vehicle width direction. On the other hand, the second oxygen sensor 50 is disposed outward of the knob 32b of the oil level gauge 32 in the vehicle width direction (see FIG. 10), and at least a portion of the knob 32b is disposed rearward of the second oxygen sensor 50 in the vehicle side view (see FIG. 9). Accordingly, when the user pinches the knob 32b with a hand and pulls the oil level gauge 32 rearward and upward from the port 31, and when the user inserts the oil level gauge 32 forward and downward into the port 31, the second oxygen sensor 50 is less likely to hinder such movement. Thus, in this preferred embodiment, the oil level gauge 32 also is easily inserted and extracted.

In the scooter 1 according to this preferred embodiment, whole second oxygen sensor 50 overlaps the exhaust pipe 24 in the vehicle bottom view as illustrated in FIG. 11. The second oxygen sensor 50 is disposed outward of the knob 32b of the oil level gauge 32 in the vehicle width direction, but does not extend inward of the exhaust pipe 24 in the vehicle width direction. Thus, the second oxygen sensor 50 is less likely to hinder insertion and extraction of the oil level gauge 32. The second oxygen sensor 50 is protected by the exhaust pipe 24 against stones thrown from below.

It should be noted that the second oxygen sensor 50 and the exhaust pipe 24 are not limited to a specific positional relationship. A portion of the second oxygen sensor 50 may not overlap the exhaust pipe 24 in the vehicle bottom view.

In the scooter 1 according to this preferred embodiment, the silencer cover 26 includes a cover upper edge portion 26a located below the upper edge portion 25a of the silencer 25 in the vehicle side view as illustrated in FIG. 9. Since the cover upper edge portion 26a is located below the upper edge portion 25a of the silencer 25, space above the upper edge portion 25a of the silencer 25 can be obtained. Thus, the silencer cover 26 is less likely to hinder insertion and extraction of the oil level gauge 32. Accordingly, the oil level gauge 32 is more easily inserted and extracted.

The second oxygen sensor 50 is attached to a portion of the exhaust pipe 24 downstream of the catalyst 20 in a flow direction of an exhaust gas. The second oxygen sensor 50 can detect an oxygen concentration of an exhaust gas purified by the catalyst 20. Thus, the second oxygen sensor 50 can detect deterioration of the catalyst 20.

The first oxygen sensor 40 is attached to a portion of the exhaust pipe 24 upstream of the catalyst 20 in a flow direction of an exhaust gas. The first oxygen sensor 40 detects an oxygen concentration of an exhaust gas ejected from the internal combustion engine 15 before purification by the catalyst 20. Accordingly, an operating state of the internal combustion engine 15 can be detected by using the first oxygen sensor 40 so that the internal combustion engine 15 can be controlled.

As illustrated in FIG. 9, at least a portion of the catalyst 20 and the knob 32b of the oil level gauge 32 are located on the same vertical line L2 in the vehicle side view. Since the catalyst 20 in addition to the knob 32b of the oil level gauge 32 is disposed in space between the internal combustion engine 15 and the silencer 25 in the vehicle side view, the second oxygen sensor 50 is placed in a further limited space. Thus, the advantage that the second oxygen sensor 50 is less likely to hinder insertion and extraction of the oil level gauge 32 described above becomes especially significant.

In this preferred embodiment, an outside diameter D22 of the second exhaust pipe 22 is also larger than an outside diameter D21 of the first exhaust pipe 21. Since the second exhaust pipe 22 provided with the fixing base 54 has the large outside diameter D22, the second oxygen sensor 50 is placed in a further limited space. Thus, the advantage that the second oxygen sensor 50 is less likely to hinder insertion and extraction of the oil level gauge 32 described above becomes especially significant.

### Other Preferred Embodiment

Although preferred embodiments of the present invention have been described above, the present invention is, of course, not limited to these preferred embodiments, and various modifications may be made.

In the preferred embodiments, the second oxygen sensor 50 is attached to a portion of the exhaust pipe 24 downstream of the catalyst 20 in a flow direction of an exhaust gas, but the position of the second oxygen sensor 50 is not limited to a specific position. The second oxygen sensor 50 may be attached to a portion of the exhaust pipe 24 upstream of the catalyst 20 in a flow direction of an exhaust gas In this case, the first oxygen sensor 40 may be omitted.

In the preferred embodiments, at least a portion of the catalyst 20 and the knob 32b of the oil level gauge 32 are located on the same vertical line L2 in the vehicle side view (see FIGS. 2 and 9). The present invention, however, is not limited to this example, and the catalyst 20 and the knob 32b of the oil level gauge 32 may not be located on the same vertical line L2 in the vehicle side view.

The outside diameter D22 of a portion (downstream portion) of the exhaust pipe 24 to which the second oxygen sensor 50 is attached may not be larger than the outside diameter D21 of a portion (upstream portion) of the exhaust pipe 24 to which the first oxygen sensor 40 is attached. For example, the outside diameter of the downstream portion may be equal to the outside diameter of the upstream portion.

A straddled vehicle as used herein refers a vehicle on which a rider sits astride, but is not limited to the scooter 1. The straddled vehicle may be a motorcycle except the scooter. Alternatively, the straddled vehicle may be a vehicle other than a motorcycle, such as a motor tricycle or an all terrain vehicle (ATV) .

### DESCRIPTION OF REFERENCE CHARACTERS

1 scooter (straddled vehicle), 15 internal combustion engine, 16 fan, 20 catalyst, 21 first exhaust pipe (upstream portion of exhaust pipe), 22 second exhaust pipe (downstream portion of exhaust pipe), 24 exhaust pipe, 25 silencer, 25a upper edge portion, 26 silencer cover, 26a cover upper edge portion, 27 silencer bracket, 27b support portion, 27f fixing portion, 27g arm portion, 27h sensor protection portion, 31 port, 32 oil level gauge, 32a gauge portion, 32b knob, 40 first oxygen sensor (another oxygen sensor), 50 second oxygen sensor (oxygen sensor), 54 fixing base, 60 fan cover

## Claims

1. A straddled vehicle (1) comprising:
an internal combustion engine (15) having an oil port (31), the oil port (31) being open rearward, upward, and outward in a vehicle width direction;
an oil level gauge (32) attached to the port (31) such that the oil level gauge (32) is insertable and extractable;
an exhaust pipe (24) including an upstream end portion (21a) connected to the internal combustion engine (15) and a downstream end portion (22b) located rearward of the upstream end portion (21a), the exhaust pipe (24) being configured such that an exhaust gas from the internal combustion engine (15) flows in the exhaust pipe (24);
a silencer (25) connected to the downstream end portion (22b) of the exhaust pipe (24) and disposed rearward of the internal combustion engine (15);
a fixing base (54) provided on the exhaust pipe (24); and
an oxygen sensor (50) attached to the fixing base (54) and configured to detect an oxygen concentration of the exhaust gas, wherein
the oil level gauge (32) includes a stem-shaped gauge portion (32a) disposed inside the internal combustion engine (15) while the oil level gauge (32) is attached to the port (31), and a knob (32b) disposed outside the internal combustion engine (15),
the fixing base (54) is disposed rearward of the port (31) and is disposed outward of the port (31) in the vehicle width direction and disposed forward of the silencer (25), and
the oxygen sensor (50) is disposed inward of a center (22C) of the exhaust pipe (24) in the vehicle width direction, and an axis (50C) of the oxygen sensor (50) is disposed below a central line (31C) of the port (31).

2. The straddled vehicle (1) according to claim 1, wherein whole oxygen sensor (50) overlaps the exhaust pipe (24) in a vehicle side view.

3. The straddled vehicle (1) according to claim 1 or 2, comprising a silencer bracket (27) including a support portion (27b) supporting the silencer (25), a fixing portion (27f) fixed to the internal combustion engine (15), and an arm portion (27g) extending rearward from the fixing portion (27f) toward the support portion (27b), wherein
the silencer bracket (27) includes a sensor protection portion (27h) disposed below at least a portion of the oxygen sensor (50) and overlapping at least a portion of the oxygen sensor (50) in a vehicle bottom view.

4. The straddled vehicle (1) according to any one of claims 1 to 3, comprising:
a fan (16) disposed outward of the internal combustion engine (15) in the vehicle width direction; and
a fan cover (60) disposed outward of the fan (16) in the vehicle width direction, wherein
the oxygen sensor (50) is disposed rearward of the fan cover (60), and
at least a portion of the oxygen sensor (50) overlaps the fan cover (60) in a vehicle front view.

5. A straddled vehicle (1) comprising:
an internal combustion engine (15) having an oil port (31), the oil port (31) being open rearward, upward, and outward in a vehicle width direction;
an oil level gauge (32) attached to the port (31) such that the oil level gauge (32) is insertable and extractable;
an exhaust pipe (24) including an upstream end portion (21a) connected to the internal combustion engine (15) and a downstream end portion (22b) located rearward of the upstream end portion (21a), the exhaust pipe (24) being configured such that an exhaust gas from the internal combustion engine (15) flows in the exhaust pipe (24);
a silencer (25) connected to the downstream end portion (22b) of the exhaust pipe (24) and disposed rearward of the internal combustion engine (15);
a fixing base (54) provided on the exhaust pipe (24); and
an oxygen sensor (50) attached to the fixing base (54) and configured to detect an oxygen concentration of the exhaust gas, wherein
the oil level gauge (32) includes a stem-shaped gauge portion (32a) disposed inside the internal combustion engine (15) while the oil level gauge (32) is attached to the port (31), and a knob (32b) disposed outside the internal combustion engine (15),
the fixing base (54) is disposed rearward of the port (31) and is disposed outward of the port (31) in the vehicle width direction and disposed forward of the silencer (25),
the oxygen sensor (50) is disposed outward of the knob (32b) of the oil level gauge (32) in the vehicle width direction in a vehicle plan view, and
at least a portion of the knob (32b) of the oil level gauge (32) is disposed rearward of the oxygen sensor (50) in a vehicle side view.

6. The straddled vehicle (1) according to claim 5, wherein whole oxygen sensor (50) overlaps the exhaust pipe (24) in a vehicle bottom view.

7. The straddled vehicle (1) according to any one of claims 1 to 6, comprising a silencer cover (26) disposed outward of the silencer (25) in the vehicle width direction, wherein
the silencer (25) includes an upper edge portion (25a) extending upward and rearward from the downstream end portion (22b) of the exhaust pipe (24) in a vehicle side view, and
the silencer cover (26) includes a cover upper edge portion (26a) disposed below the upper edge portion (25a) of the silencer (25) in the vehicle side view.

8. The straddled vehicle (1) according to any one of claims 1 to 7, comprising a catalyst (20) that is disposed inside the exhaust pipe (24) and purifies the exhaust gas, wherein
the oxygen sensor (50) is attached to a portion of the exhaust pipe (24) downstream of the catalyst (20) in a flow direction of the exhaust gas.

9. The straddled vehicle (1) according to claim 8, wherein at least a portion of the catalyst (20) and the knob (32b) of the oil level gauge (32) are located on an identical vertical line (L2) in a vehicle side view.

10. The straddled vehicle (1) according to claim 8 or 9, comprising another oxygen sensor (40) attached to a portion of the exhaust pipe (24) upstream of the catalyst (20) in a flow direction of the exhaust gas.

11. The straddled vehicle (1) according to claim 10, wherein the exhaust pipe (24) includes an upstream portion (21) to which the another oxygen sensor (40) is attached and a downstream portion (22) disposed downstream of the upstream portion (21) in a flow direction of the exhaust gas and provided with the fixing base (54),
the downstream portion (22) has an outside diameter (D22) larger than an outside diameter (D21) of the upstream portion (21), and
the catalyst (20) is disposed inside the downstream portion (22).

## Patentansprüche

1. Spreizsitz-Fahrzeug (1), das umfasst:
einen Verbrennungsmotor (15) mit einer Öl-Einfüllöffnung (31), wobei die Öl-Einfüllöffnung (31) nach hinten, nach oben und in einer Fahrzeug-Breitenrichtung nach außen offen ist;
einen Ölmessstab (32), der so an der Einfüllöffnung (31) angebracht ist, dass der Ölmessstab (32) eingeführt und herausgezogen werden kann;
ein Auspuffrohr (24), das einen stromauf liegenden Endabschnitt (21a), der mit dem Verbrennungsmotor (15) verbunden ist, und einen stromab liegenden Endabschnitt (22b) enthält, der sich hinter dem stromauf liegenden Endabschnitt (21a) befindet, wobei das Auspuffrohr (24) so eingerichtet ist, dass ein Abgas von dem Verbrennungsmotor (15) in dem Auspuffrohr (24) strömt;
einen Schalldämpfer (25), der mit dem stromab liegenden Endabschnitt (22b) des Auspuffrohrs (24) verbunden und hinter dem Verbrennungsmotor (15) angeordnet ist;
einen Befestigungssockel (54), der an dem Auspuffrohr (24) vorhanden ist; sowie
einen Sauerstoff-Sensor (50), der an dem Befestigungssockel (54) angebracht und so eingerichtet ist, dass er eine Sauerstoffkonzentration des Abgases erfasst, wobei
der Ölmessstab (32) einen schaftförmigen Anzeigeabschnitt (32a), der im Inneren des Verbrennungsmotors (15) angeordnet ist, wenn der Ölmessstab (32) an der Einfüllöffnung (31) angebracht ist, und einen Knopf (32b) umfasst, der außerhalb des Verbrennungsmotors (15) angeordnet ist,
der Befestigungssockel (54) hinter der Einfüllöffnung (31) angeordnet ist und in der Fahrzeug-Breitenrichtung außerhalb der Einfüllöffnung (31) angeordnet ist und vordem Schalldämpfer (25) angeordnet ist, und
der Sauerstoff-Sensor (50) in der Fahrzeug-Breitenrichtung innerhalb einer Mitte (22C) des Auspuffrohrs (24) angeordnet ist, und eine Achse (50C) des Sauerstoff-Sensors (50) unterhalb einer Mittellinie (31C) der Einfüllöffnung (31) angeordnet ist.

2. Spreizsitz-Fahrzeug (1) nach Anspruch 1, wobei der gesamte Sauerstoff-Sensor (50) in einer Seitenansicht des Fahrzeugs das Auspuffrohr (24) überlappt.

3. Spreizsitz-Fahrzeug (1) nach Anspruch 1 oder 2, das eine Schalldämpfer-Halterung (27) umfasst, die einen Trageabschnitt (27b), der den Schalldämpfer (25) trägt, einen Befestigungsabschnitt (27f), der an dem Verbrennungsmotor (15) befestigt ist, sowie einen Armabschnitt (27g) einschließt, der sich von dem Befestigungsabschnitt (27f) nach hinten auf den Trageabschnitt (27b) zu erstreckt, wobei
die Schalldämpfer-Halterung (27) einen Sensor-Schutzabschnitt (27h) einschließt, der unterhalb wenigstens eines Abschnitts des Sauerstoff-Sensors (50) angeordnet ist und in einer Unteransicht des Fahrzeugs wenigstens einen Abschnitt des Sauerstoffsensors (50) überlappt.

4. Spreizsitz-Fahrzeug (1) nach einem der Ansprüche 1 bis 3, das umfasst:
einen Lüfter (16), der in der Fahrzeug-Breitenrichtung außerhalb des Verbrennungsmotors (15) angeordnet ist; sowie
eine Lüfter-Abdeckung (60), die in der Fahrzeug-Breitenrichtung außerhalb des Lüfters (16) angeordnet ist, wobei
der Sauerstoff-Sensor (50) hinter der Lüfter-Abdeckung (60) angeordnet ist, und
wenigstens ein Abschnitt des Sauerstoff-Sensors (50) in einer Vorderansicht des Fahrzeugs die Lüfter-Abdeckung (60) überlappt.

5. Spreizsitz-Fahrzeug (1), das umfasst:
einen Verbrennungsmotor (15) mit einer Öl-Einfüllöffnung (31), wobei die Öl-Einfüllöffnung (31) nach hinten, nach oben und in einer Fahrzeug-Breitenrichtung nach außen offen ist;
einen Ölmessstab (32), der so an der Einfüllöffnung (31) angebracht ist, dass der Ölmessstab (32) eingeführt und herausgezogen werden kann;
ein Auspuffrohr (24), das einen stromauf liegenden Endabschnitt (21a), der mit dem Verbrennungsmotor (15) verbunden ist, und einen stromab liegenden Endabschnitt (22b) enthält, der sich hinter dem stromauf liegenden Endabschnitt (21a) befindet, wobei das Auspuffrohr (24) so eingerichtet ist, dass ein Abgas von dem Verbrennungsmotor (15) in dem Auspuffrohr (24) strömt;
einen Schalldämpfer (25), der mit dem stromab liegenden Endabschnitt (22b) des Auspuffrohrs (24) verbunden und hinter dem Verbrennungsmotor (15) angeordnet ist;
einen Befestigungssockel (54), der an dem Auspuffrohr (24) vorhanden ist; sowie
einen Sauerstoff-Sensor (50), der an dem Befestigungssockel (54) angebracht und so eingerichtet ist, dass er eine Sauerstoffkonzentration des Abgases erfasst, wobei
der Ölmessstab (32) einen schaftförmigen Anzeigeabschnitt (32a), der im Inneren des Verbrennungsmotors (15) angeordnet ist, wenn der Ölmessstab (32) an der Einfüllöffnung (31) angebracht ist, und einen Knopf (32b) umfasst, der außerhalb des Verbrennungsmotors (15) angeordnet ist,
der Befestigungssockel (54) hinter der Einfüllöffnung (31) angeordnet ist, in der Fahrzeug-Breitenrichtung außerhalb der Einfüllöffnung (31) angeordnet ist und vor dem Schalldämpfer (25) angeordnet ist,
der Sauerstoff-Sensor (50) in einer Draufsicht auf das Fahrzeug in der Fahrzeug-Breitenrichtung außerhalb des Knopfes (32b) des Ölmessstabes (32) angeordnet ist, und
wenigstens ein Abschnitt des Knopfes (32b) des Ölmessstabes (32) in einer Seitenansicht des Fahrzeugs hinter dem Sauerstoff-Sensor (50) angeordnet ist.

6. Spreizsitz-Fahrzeug (1) nach Anspruch 5, wobei der gesamte Sauerstoff-Sensor (50) in einer Unteransicht des Fahrzeugs das Auspuffrohr (24) überlappt.

7. Spreizsitz-Fahrzeug (1) nach einem der Ansprüche 1 bis 6, das eine Schalldämpfer-Abdeckung (26) umfasst, die in der Fahrzeug-Breitenrichtung außerhalb des Schalldämpfers (25) angeordnet ist, wobei
der Schalldämpfer (25) einen Oberkantenabschnitt (25a) einschließt, der sich in einer Seitenansicht des Fahrzeugs von dem stromab liegenden Endabschnitt (22b) des Auspuffrohrs (24) nach oben und nach hinten erstreckt, und
die Schalldämpfer-Abdeckung (26) einen Abdeckungs-Oberkantenabschnitt (26a) einschließt, der in der Seitenansicht des Fahrzeugs unterhalb des Oberkantenabschnitts (25a) des Schalldämpfers (25) angeordnet ist.

8. Spreizsitz-Fahrzeug (1) nach einem der Ansprüche 1 bis 7, das einen Katalysator (20) umfasst, der im Inneren des Auspuffrohrs (24) angeordnet ist und das Abgas reinigt, wobei
der Sauerstoff-Sensor (50) an einem Abschnitt des Auspuffrohrs (24) angebracht ist, der in einer Strömungsrichtung des Abgases stromab von dem Katalysator (20) liegt.

9. Spreizsitz-Fahrzeug (1) nach Anspruch 8, wobei wenigstens ein Abschnitt des Katalysators (20) und der Knopf (32b) des Ölmessstabes (32) in einer Seitenansicht des Fahrzeugs auf einer identischen vertikalen Linie (L2) liegen.

10. Spreizsitz-Fahrzeug (1) nach Anspruch 8 oder 9, das einen weiteren Sauerstoff-Sensor (40) umfasst, der an einem Abschnitt des Auspuffrohrs (24) angebracht ist, der in einer Strömungsrichtung des Abgases stromauf von dem Katalysator (20) liegt.

11. Spreizsitz-Fahrzeug (1) nach Anspruch 10, wobei das Auspuffrohr (24) einen stromauf liegenden Abschnitt (21), an dem der weitere Sauerstoff-Sensor (40) angebracht ist, sowie einen stromab liegenden Abschnitt (22) enthält, der in einer Strömungsrichtung des Abgases stromab von dem stromauf liegenden Abschnitt (21) angeordnet und mit dem Befestigungssockel (54) versehen ist,
der stromab liegende Abschnitt (22) einen Außendurchmesser (D22) hat, der größer ist als ein Außendurchmesser (D21) des stromauf liegenden Abschnitts (21), und
der Katalysator (20) innerhalb des stromab liegenden Abschnitts (22) angeordnet ist.

## Revendications

1. Véhicule à selle (1) comprenant :
un moteur à combustion interne (15) comportant un orifice d'huile (31), l'orifice d'huile (31) étant ouvert vers l'arrière, vers le haut et vers l'extérieur dans la direction de la largeur du véhicule,
une jauge de niveau d'huile (32) fixée à l'orifice (31) de sorte à ce que la jauge de niveau d'huile (32) puisse être insérée et extraite,
un tuyau d'échappement (24) incluant une terminaison amont (21a) raccordée au moteur à combustion interne (15) et une terminaison aval (22b) située à l'arrière de la terminaison amont (21a), le tuyau d'échappement (24) étant configuré de sorte à ce que les gaz d'échappement provenant du moteur à combustion interne (15) s'écoulent dans le tuyau d'échappement (24),
un silencieux (25) raccordé à la terminaison aval (22b) du tuyau d'échappement (24) et placé à l'arrière du moteur à combustion interne (15),
une base de fixation (54) disposée sur le tuyau d'échappement (24), et
un capteur d'oxygène (50) fixé à la base de fixation (54) et configuré pour détecter la concentration en oxygène des gaz d'échappement, dans lequel
la jauge de niveau d'huile (32) inclut une partie en forme de tige formant jauge (32a) disposée à l'intérieur du moteur à combustion interne (15) alors que la jauge de niveau d'huile (32) est fixée à l'orifice (31), ainsi qu'un bouton (32b) disposé à l'extérieur du moteur à combustion interne (15),
la base de fixation (54) est placée à l'arrière de l'orifice (31) et elle est placée à l'extérieur de l'orifice (31) dans la direction de la largeur du véhicule et à l'avant du silencieux (25), et
le capteur d'oxygène (50) est placé à l'intérieur du centre (22C) du tuyau d'échappement (24) dans la direction de la largeur du véhicule, et l'axe (50C) du capteur d'oxygène (50) est disposé en dessous de la droite centrale (31C) de l'orifice (31).

2. Véhicule à selle (1) selon la revendication 1, dans lequel la totalité du capteur d'oxygène (50) chevauche le tuyau d'échappement (24) selon une vue latérale du véhicule.

3. Véhicule à selle (1) selon la revendication 1 ou la revendication 2, comprenant un support de silencieux (27) incluant un organe de support (27b) soutenant le silencieux (25), un organe de fixation (27f) fixé au moteur à combustion interne (15), et un bras (27g) s'étendant vers l'arrière à partir de l'organe de fixation (27f) vers l'organe de support (27b), dans lequel
le support de silencieux (27) inclut un organe de protection de capteur (27h) disposé en dessous d'au moins une partie du capteur d'oxygène (50) et chevauchant au moins une partie du capteur d'oxygène (50) selon une vue de dessous du véhicule.

4. Véhicule à selle (1) selon l'une quelconque des revendications 1 à 3, comprenant :
un ventilateur (16) disposé à l'extérieur du moteur à combustion interne (15) dans la direction de la largeur du véhicule, et
un carter de ventilateur (60) placé à l'extérieur du ventilateur (16) dans la direction de la largeur du véhicule, dans lequel
le capteur d'oxygène (50) est placé à l'arrière du carter de ventilateur (60), et
au moins une partie du capteur d'oxygène (50) chevauche le carter de ventilateur (60) selon une vue avant du véhicule.

5. Véhicule à selle (1) comprenant :
un moteur à combustion interne (15) comportant un orifice d'huile (31), l'orifice d'huile (31) étant ouvert vers l'arrière, vers le haut et vers l'extérieur dans la direction de la largeur du véhicule,
une jauge de niveau d'huile (32) fixée à l'orifice (31) de sorte à ce que la jauge de niveau d'huile (32) puisse être insérée et extraite,
un tuyau d'échappement (24) incluant une terminaison amont (21a) raccordée au moteur à combustion interne (15) et une terminaison aval (22b) située à l'arrière de la terminaison amont (21a), le tuyau d'échappement (24) étant configuré de sorte à ce que les gaz d'échappement provenant du moteur à combustion interne (15) s'écoulent dans le tuyau d'échappement (24),
un silencieux (25) raccordé à la terminaison aval (22b) du tuyau d'échappement (24) et placé à l'arrière du moteur à combustion interne (15),
une base de fixation (54) disposée sur le tuyau d'échappement (24), et
un capteur d'oxygène (50) fixé à la base de fixation (54) et configuré pour détecter la concentration en oxygène des gaz d'échappement, dans lequel
la jauge de niveau d'huile (32) inclut une partie en forme de tige formant jauge (32a) disposée à l'intérieur du moteur à combustion interne (15) alors que la jauge de niveau d'huile (32) est fixée à l'orifice (31), ainsi qu'un bouton (32b) disposé à l'extérieur du moteur à combustion interne (15),
la base de fixation (54) est placée à l'arrière de l'orifice (31) et elle est placée à l'extérieur de l'orifice (31) dans la direction de la largeur du véhicule et à l'avant du silencieux (25), et
le capteur d'oxygène (50) est placé à l'extérieur du bouton (32b) de la jauge de niveau d'huile (32) dans la direction de la largeur du véhicule selon une vue en plan du véhicule, et
au moins une partie du bouton (32b) de la jauge de niveau d'huile (32) est placée à l'arrière du capteur d'oxygène (50) selon une vue latérale du véhicule.

6. Véhicule à selle (1) selon la revendication 5, dans lequel la totalité du capteur d'oxygène (50) chevauche le tuyau d'échappement (24) selon une vue latérale du véhicule.

7. Véhicule à selle (1) selon l'une quelconque des revendications 1 à 6, comprenant un carter de silencieux (26) placé à l'extérieur du silencieux (25) dans la direction de la largeur du véhicule, dans lequel
le silencieux (25) inclut une bordure supérieure (25a) s'étendant vers le haut et vers l'arrière à partir de la terminaison aval (22b) du tuyau d'échappement (24) selon une vue latérale du véhicule, et
le carter de silencieux (26) inclut une bordure supérieure de carter (26a) placée en dessous de la bordure supérieure (25a) du silencieux (25) selon une vue latérale du véhicule.

8. Véhicule à selle (1) selon l'une quelconque des revendications 1 à 7, comprenant un catalyseur (20) qui est placé à l'intérieur du tuyau d'échappement (24) et qui purifie les gaz d'échappement, dans lequel
le capteur d'oxygène (50) est fixé à un organe du tuyau d'échappement (24) en aval du catalyseur (20) dans la direction d'écoulement des gaz d'échappement.

9. Véhicule à selle (1) selon la revendication 8, dans lequel au moins une partie du catalyseur (20) et le bouton (32b) de la jauge de niveau d'huile (32) sont situés sur une ligne verticale identique (L2) selon une vue latérale du véhicule.

10. Véhicule à selle (1) selon la revendication 8 ou la revendication 9, comprenant un autre capteur d'oxygène (40) fixé à un organe du tuyau d'échappement (24) en amont du catalyseur (20) dans la direction d'écoulement des gaz d'échappement.

11. Véhicule à selle (1) selon la revendication 10, dans lequel le tuyau d'échappement (24) inclut une partie amont (21) à laquelle est fixé l'autre capteur d'oxygène (40) ainsi qu'une partie aval (22) placée en aval de la partie amont (21) dans la direction d'écoulement des gaz d'échappement, et munie de la base de fixation (54),
la partie aval (22) présente un diamètre externe (D22) plus grand que le diamètre externe (D21) de la partie amont (21), et
le catalyseur (20) est disposé à l'intérieur de la partie aval (22).
